**Europäisches Patentamt**

**European Patent Office**

**Office européen des brevets**

(11) Veröffentlichungsnummer: **0 173 121**
A2

## (12) EUROPÄISCHE PATENTANMELDUNG

(21) Anmeldenummer: **85109830.1**

(22) Anmeldetag: **05.08.85**

(51) Int. Cl.⁴: **H 01 M 12/06**

(30) Priorität: **22.08.84 DE 3430898**

(43) Veröffentlichungstag der Anmeldung: **05.03.86**
**Patentblatt 86/10**

(84) Benannte Vertragsstaaten: **AT BE CH DE FR GB IT LI LU NL SE**

(71) Anmelder: **C. CONRADTY NÜRNBERG GmbH & Co. KG,
Grünthal 1-6, D-8505 Röthenbach a.d. Pegnitz (DE)**

(72) Erfinder: **Pietrulla, Wolfgang, Prof. Dr., Postfach 33 00 13,
D-1000 Berlin 33 (DE)**

(74) Vertreter: **Kern, Wolfgang Dipl.-Ing. et al, Patentanwälte
Tischer, Kern & Brehm Albert-Rosshaupter-Strasse 65,
D-8000 München 70 (DE)**

(54) Galvanische Trockenzelle.

(57)   Die Erfindung betrifft eine galvanische Trockenzelle mit einer negativen Elektrode aus einem unedlen Metall und einer positiven Ableitelektrode aus Kohlenstoffmaterial oder inertem metallischen oder metalloxidischen Material oder aus einer Kombination dieser Materialien. Als Elektrolyt und zugleich Reaktant an der positiven Ableitelektrode dienen pastöse, wasserhaltige, der Reduktion zugängliche, eisenhaltige Verbindungsgemische, die durch Einwirkung von Luftsauerstoff fortlaufend zurückoxidiert werden. Zur Erreichung brauchbarer Nullspannungen wird vorzugsweise Magnesium als Material für die negative Elektrode eingesetzt. Die so gebildeten galvanischen Trockenzellen haben sich bei kontinuierlicher, verhältnismäßig hoher Belastung gegenüber vergleichbaren handelsüblichen galvanischen Leclanché-Trockenzellen bezüglich ihrer Leistungsfähigkeit und ihres Entladeverhaltens als überlegen erwiesen.

PATENTANWÄLTE : 0173121

# TISCHER, KERN & BREHM

Albert-Rosshaupter-Strasse 65 · D 8000 München 70 · Telefon (089) 7 60 55 20 · Telex 5214950 isar d   Telegramme Kernpatent München

## Galvanische Trockenzelle

Die Erfindung betrifft eine galvanische Trockenzelle gemäß dem Oberbegriff des Anspruchs 1.

Galvanische Trockenzellen sind Primärzellen mit festgelegtem Elektrolyten. Die Zink-Salmiak-Braunstein-Zelle nach Leclanché ist bis heute die weitaus wichtigste aller galvanischen Primärzellen, die in großem Ausmaß hergestellt und auf der ganzen Welt angewendet wird (K.J. Euler, "Batterien und Brennstoffzellen", Berlin, Heidelberg, New York 1982).

Die Leclanché-Primärzelle war ursprünglich ein "Naßelement" mit einem flüssigen Elektrolyten aus wässriger Ammoniumchlorid-Lösung. Die negative Elektrode war Zink, als positive Ableitelektrode diente Kohlenstoffmaterial, an dem als Reaktant Mangandioxid (Braunstein) wirkte. Ihre außerordentlich umfangreiche, praktische Anwendbarkeit gewann diese Primärzelle, als es gegen Ende des vorigen Jahrhunderts gelang, den flüssigen Elektrolyten durch Zusatz von Quellstoffen zu verfestigen. Dazu wurde nach Paul Schmidt (1899) Weizenmehl verwendet, das neben Stärke und Carboxymethylcellulose auch heute noch zu diesem Zweck eingesetzt wird.

Die Leclanché-Zellen sind zu einem hohen technischen Stand entwickelt worden, wobei auch die Energielieferung wesentlich gesteigert wurde. Sie haben jedoch den Nachteil, daß ihre Entladecharakteristik, also die Abnahme von Spannung und Strom mit der Zeit, insbesondere bei hoher Belastung vergleichsweise ungünstig ist. Auch durch die Verbesserung der Leclanché-Zelle durch Umwandlung

zur alkalischen Zink-Braunstein-Zelle, wurde dieser Nachteil nur verringert, jedoch nicht beseitigt, obwohl das Entladeverhalten dadurch günstiger wurde (F.V. Sturm "Elektrochemische Stromerzeugung", Weinheim, Bergstraße, 1969).

Eine wesentlich bessere Entladecharakteristik haben die Quecksilberoxid-Zink-Trockenzellen nach S. Ruben (1942), die z.B. in Hörgeräten verwendet werden. Einer weiteren Verbreitung dieser Zellen, insbesondere für Anwendungsgebiete mit höherer Belastung, stehen jedoch der hohe Preis des Quecksilbers, die akute Toxizität des Quecksilberoxids und die Umweltgefährlichkeit der Quecksilberverbindungen entgegen. Hinzu kommt, daß der Elektrolyt aus 40 %iger Kalilauge besteht, und die Herstellung dieser Zellen kompliziert ist.

Einer weiteren Verbreitung anderer neuerer Primärzellen wie Silberoxidzellen oder Lithiumzellen mit ebenfalls günstigem Entladeverhalten stehen hohe Rohstoff- und Herstellungskosten entgegen.

Die Aufgabe der Erfindung besteht deshalb darin, eine Trockenzelle zu schaffen, die ein günstigeres Entladeverhalten als die Leclanché-Zellen bei Verwendung billiger und harmloser Komponenten aufweist, und zwar insbesondere bei starker Belastung. Darüber hinaus sollen nur Rohstoffe verwendet werden, die harmlos und umweltfreundlich sind und auch in ferner Zukunft in praktisch unbegrenzter Menge zur Verfügung stehen.

Diese Aufgabe wird gemäß dem Kennzeichen des Anspruchs 1 gelöst. Als negative Elektroden dienen unedle Metalle, als positive Ableitelektroden solche aus Kohlenstoffmaterial oder aus inertem metallischen oder metalloxidischen Material oder aus einer Kombination dieser Materialien. Aufgrund der Konsistenz des neuartigen Elektrolyten sind die erfindungsgemäßen Primärzellen galvanische Trockenzellen.

Die Erfindung geht davon aus, daß Eisen(III)-Verbindungen zu Eisen(II)-Verbindungen reduziert werden können. Da eine Trockenzelle zu schaffen war, kamen grundsätzlich der Reduktion zugängliche Eisen(III)-Verbindungen in pastösem, wasserhaltigen Zustand in Betracht. So entstehen bei der Ausfällung von Eisen(III)-hydroxid aus wässrigen Eisen(III)-Salzlösungen bekanntlich wasserhaltige Massen gelartigen Charakters, die als Eisen(III)-hydroxid-Gel der allgemeinen Formel $Fe_2O_3 \cdot x\,H_2O$ charakterisiert werden können.

Zur Schaffung der erfindungsgemäßen galvanischen Trockenzelle wurde untersucht, ob derartige oxidische oder hydroxidische Massen als Elektrolyt und zugleich Reaktant an der Ableitelektrode verwendet werden können, indem ihr hoher Wassergehalt und ein Gehalt an Fremdionen, die durch die Ausfällung entstehen oder nach der Ausfällung zugesetzt werden, zur Erzielung einer hinreichenden elektrolytischen Leitfähigkeit ausgenutzt werden.

Die Eignung derartiger Massen dafür, gleichzeitig an der positiven Ableitelektrode als Reaktant zu wirken, beruht darauf, daß wasserhaltiges Eisen(II)-hydroxid durch Einwirkung von Luftsauerstoff in neutralem oder alkalischem Milieu leicht und schnell zu Eisen(III)-hydroxid oxidiert wird, und zwar nach der Bruttogleichung:

$$2\,Fe(OH)_2 + H_2O + \tfrac{1}{2}\,O_2 \longrightarrow 2Fe(OH)_3.$$

Da das Redoxpotential z.B. von $Fe_2O_3 \cdot 3H_2O$ im alkalischen Milieu nur -0,75 V beträgt, wurde als negative Elektrode der erfindungsgemäßen Trockenzelle vor allem Magnesium in Betracht gezogen, dessen Redoxpotential -2,4 V ist.

In den handelsüblichen galvanischen Trockenzellen nach Leclanché und ihren Weiterentwicklungen ist Zink das bevorzugte Metall für die negative Elektrode. Allerdings werden auch Aluminium oder Magnesium in derartigen Tockenzellen verwendet ("The Primary Battery", Vol. II, N.C. Cahoon und G.W. Heise, New York, London, Sidney, Toronto 1976). Diese Metalle haben jedoch noch keine wesentliche Bedeutung als negative Elektroden von Trockenzellen erlangt.

Mit Magnesium als negativer Elektrode lassen sich für die erfindungsgemäße Trockenzelle ausreichend hohe Nullspannungen erzielen. Magnesium ist andererseits ein Metall, das im Gegensatz zu Zink auch in ferner Zukunft in praktisch unbegrenzter Menge zur Verfügung steht, da Magnesiumverbindungen in den Salzlagern und im Meerwasser reichlich vorhanden sind. Desweiteren sind Magnesium und seine Verbindungen der hier in Betracht kommenden Art auch umweltfreundlich.

Ein anderes Metall, das als negative Elektrode für die erfindungsgemäßen Trockenzellen in Betracht kommt, ist Eisen, das ebenfalls rohstoffgünstig und umweltfreundlich ist. Allerdings sind bei seiner Verwendung verhältnismäßig geringe Nullspannungen in Kauf zu nehmen.

Mit Aluminium als negativer Elektrode in den erfindungsgemäßen Trockenzellen lassen sich ebenfalls im Vergleich zu Magnesium nur relativ geringe Nullspannungen erzielen. Aluminium ist zwar ebenfalls umweltfreundlich, jedoch im Hinblick auf die zukünftige Rohstoffsituation ungünster als Magnesium. Magnesium kann als negative Elektrode in den erfindungsgemäßen Trockenzellen in Form des reinen Metalls oder in Form von Magnesiumlegierungen verwendet werden, wie sie für den kathodischen Schutz eingesetzt werden. Für die positive Ableitelektrode

- 5 -

0173121

kommen Kohlenstoffmaterialien oder metallische oder metalloxidische Materialien oder Kombinationen dieser Materialien in Betracht.

Ferner haben sich für die erfindungsgemäßen Trockenzellen auch Kohlenstoffelektroden aus einem flexiblen, gut leitenden, mattenartigen Kohlenstoffkörper bewährt, die zur Stromableitung mit Formkörpern aus verdichtetem Kohlenstoff kombiniert sind (DE-PS 26 12 712).

Als Elektrolyt und zugleich Reaktant an der positiven Ableitelektrode können Eisen(III)-hydroxid-Gele verwendet werden, die durch Ausfällung aus wässrigen Eisen(III)-Salzlösungen mit alkalischen Verbindungen, wie beispielsweise Kaliumhydroxid oder Natriumhydroxid, gewonnen werden. Diese gelartigen Massen werden auf pastöse Konsistenz, ausreichenden Wassergehalt, vorzugsweise neutrales Milieu und hinreichende elektrolytische Leitfähigkeit eingestellt, indem der durch die Ausfällung entstandene Elektrolytgehalt ausgenutzt wird oder nachträglich die Leitfähigkeit fördernde Fremdionen zugesetzt werden.

Eine Reihe von Versuchszellen wurde nach den erfindungsgemäßen Merkmalen aufgebaut bzw. ausgestattet. Dabei wurde für ausreichenden Luftzutritt gesorgt, damit reduziertes dreiwertiges Eisen fortlaufend zurückoxidiert werden konnte. Die erzielten Werte der Nullspannung lagen je nach der verwendeten Magnesiumlegierung bzw. Magnesiumreinheit zwischen 1,323 V und 1,850 V. Es konnten Energieinhalte bis zu 167 Wh/kg und Energiedichten bis zu 333 Wh/l erhalten werden.

Die Versuchszellen zeigten hinsichtlich kontinuierlicher, verhältnismäßig hoher Belastungen ein sehr günstiges Entladeverhalten, indem Spannung und Strom mit der Zeit nur geringfügig abnahmen.

Die Energielieferung der erfindungsgemäßen Trockenzellen
wird in erster Linie durch den Verbrauch des negativen
Elektrodenmaterials begrenzt. Die positiven Ableitelektroden sind im Hinblick auf die Funktion der Zellen inert
und werden daher nicht verbraucht. Die Elektrolytmasse
wird infolge der fortlaufenden Oxidation von entstandenem zweiwertigem zu dreiwertigem Eisen ebenfalls nicht
verbraucht. Ihrer Funktionsfähigkeit könnten allerdings
bei Verwendung von Magnesium als negatives Elektrodenmaterial dadurch Grenzen gesetzt werden, daß Magnesiumhydroxid als Folge des elektrochemischen Angriffs auf
die negative Elektrode allmählich in zu großer Menge entsteht. Dieser Erscheinung läßt sich jedoch durch eine entsprechende Dimensionierung entgegenwirken. Es ist auch
möglich, beispielsweise durch besondere Einrichtungen
der Zellen, Magnesiumhydroxid aus der Elektrolytmasse
zu entfernen und die Magnesiumelektroden zu ersetzen.

Bei sehr langen Laufzeiten der erfindungsgemäßen Trockenzellen ist gegebenenfalls das verbrauchte Wasser zu ersetzen, wofür geeignete Einrichtungen zur Verfügung
stehen oder ohne weiteres geschaffen werden können.

Die Entstehung von Wasserstoff hat sich beim Betrieb der
Versuchszellen als unerheblich erwiesen, da offenbar
auch eine direkte Reaktion von Magnesium mit Hydroxidionen unter Elektronenlieferung stattfindet.

Die Erfindung wird im folgenden anhand des in der Zeichnung dargestellten Ausführungsbeispiels noch weiter erläutert. In der Zeichnung zeigt:

Figur 1    eine schematische Querschnittsansicht einer
           runden Trockenzelle mit Deckel und

Figur 2    eine geschnittene Draufsicht der Trockenzelle
           von Fig. 1.

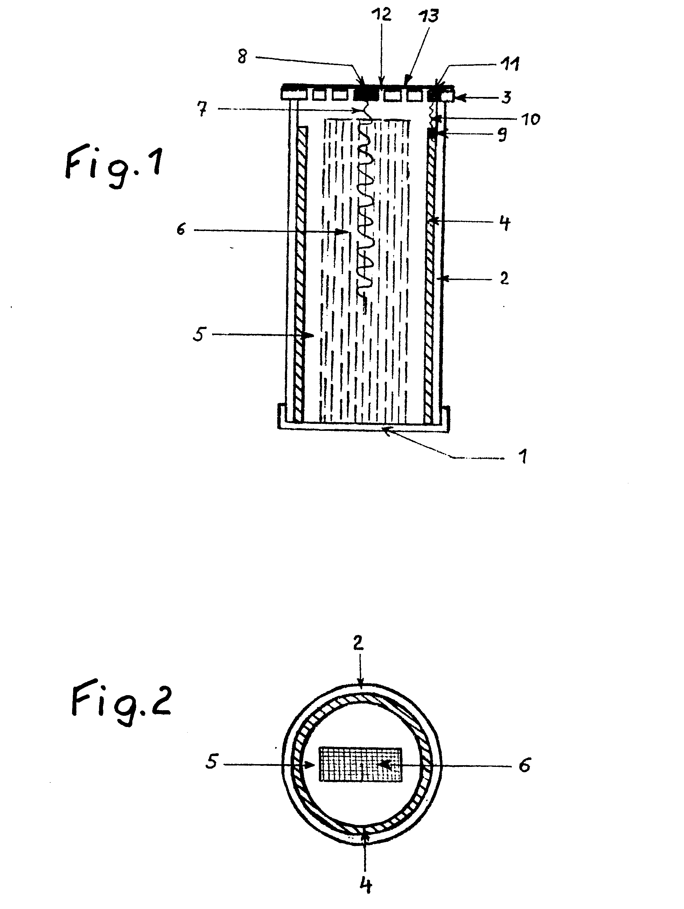

Die in Fig. 1 dargestellte Zelle besteht aus einem Deckel 3 aus Kunststoffmaterial und einem Unterteil. Der Deckel besitzt sechs Löcher 12 für den Zutritt von Luft, die vor Inbetriebnahme der Zelle durch einen zu entfernenden Klebstreifen 13 verschlossen sind. Der den Sockel 1 und den Mantel 2 bildende Unterteil stellt das zylindrische Zellengefäß dar und besteht ebenfalls aus Kunststoffmaterial. Mit 4 ist ein zylindrisches Rohr aus Magnesium bezeichnet, das als negative Elektrode dient. Über eine Schraubverbindung 9 führt ein Ableitungsdraht, beispielsweise ein Kupferdraht, zu der negativen Stromableitungsbuchse 11 im Deckel 3.

Innerhalb der Zelle befindet sich die positive Ableitelektrode 6 aus Kohlenstoffmaterial, die durch einen mit Windungen versehenen Kupferdraht 7 mit einer positiven Stromableitungsbuchse 8 im Deckel 3 verbunden ist. Zwischen der zylindrischen Magnesiumelektrode 4 und der positiven Ableitelektrode 6 befindet sich die Elektrolytmasse 5, über die die positive Ableitelektrode 6 hinausragt. Der Raum zwischen Elektrolytmasse 5 und Deckel 3 bleibt frei. Die Elektrolytmasse 5 wird bis unterhalb der Schraubverbindung 9 eingefüllt.

Die in den beiden Zeichnungsfiguren dargestellte Trockenzelle hatte ein Gesamtvolumen von 80 ml und nach Einfüllung der Elektrolytmasse ein Gesamtgewicht von 132 g. Als Elektrolytmasse diente Eisen(III)-hydroxid-Gel, das aus wässriger Eisen(III)-chlorid-Lösung durch Kaliumhydroxid ausgefällt worden war. Die nach der Einfüllung der Elektrolytmasse gemessene Nullspannung der Zelle betrug 1,34 V. Die Zelle wurde mit einem Widerstand von 10 Ohm belastet und 421 Stunden lang kontinuierlich betrieben. Die Arbeitsspannung betrug dabei durchschnittlich 0,542 V und der Arbeitsstrom durchschnittlich 0,048 A. Es ergaben sich insgesamt ein Energieinhalt von 82,98 Wh/kg und eine Energiedichte von 136,91 Wh/l.

Zum Vergleich wurde eine handelsübliche Leclanché-Monozelle IEC R20 mit einem Volumen von 51,3 ml und einem Gewicht von 100 g in gleicher Weise mit einem Widerstand von 10 Ohm belastet und kontinuierlich betrieben. Diese Zelle hatte eine Nullspannung von 1,69 V. Ein vergleichbarer Endwert der Arbeitsspannung war nach 212 Betriebsstunden erreicht, wobei die Arbeitsspannung kontinuierlich abgenommen hat. Es ergaben sich eine durchschnittliche Arbeitsspannung von 0,55 V und ein durchschnittlicher Arbeitsstrom von 0,048 A. Der Energieinhalt ergab sich insgesamt zu 55,97 Wh/kg und die Energiedichte zu 109,1 Wh/l.

Um die Leistungsfähigkeit der erfindungsgemäßen Trockenzellen auch im Batteriebetrieb zu veranschaulichen, wurden vier Trockenzellen in Kastenform zu einer Batterie kombiniert, wobei je zwei Zellen parallel und dann in Reihe geschaltet wurden. Diese Batterie wog insgesamt 1.500 g. Mit ihr wurde eine 0,5 W-Glühlampe 320 Stunden lang kontinuierlich betrieben. Es ergaben sich ein Energieinhalt von 85,3 Wh/kg und eine Energiedichte von 80 Wh/l, wobei noch darauf hinzuweisen ist, daß für den kastenförmigen Aufbau der Zellen nur ein relativ schweres Kunststoffmaterial und für die negativen Elektroden nur eine der weniger aktiven Magnesiumlegierungen zur Verfügung standen.

Eine vergleichbare, analog geschaltete Batterie aus vier handelsüblichen Leclanché-Monozellen IEC R 20 wog 364 g. Sie wurde ebenfalls kontinuierlich mit einer 0,5 W-Glühlampe belastet. Die Betriebsdauer bis zum Erreichen des gleichen Endwertes der Arbeitsspannung betrug hier nur 31 Stunden, war also erheblich kürzer als bei der erfindungsgemäßen Batterie. Als Energieinhalt ergaben sich 30,85 Wh/kg und als Energiedichte 56,15 Wh/l.

Aus den obigen Vergleichsmessungen ergibt sich eindeutig, daß die erfindungsgemäßen galvanischen Trockenzellen den handelsüblichen Leclanché-Trockenzellen bei kontinuierlicher Belastung überlegen sind.

Darüber hinaus überraschen die erfindungsgemäßen Trockenzellen durch ihren einfachen Aufbau, ihre Unbedenklichkeit im Sinne des Umweltschutzes, die Harmlosigkeit der verwendeten Chemikalien und die Tatsache, daß die verwendeten Rohstoffe auch in Zukunft in nahezu unbegrenzter Menge zur Verfügung stehen.

0173121

Plet-7257
Ke/ck

Professor Dr. Wolfgang Metzula
Postfach 33 00 13
1000  Berlin  33

P a t e n t a n s p r ü c h e

1.    Galvanische Trockenzelle mit einer negativen Elektrode
aus einem unedlen Metall und mit einer positiven Ableitelektrode aus Kohlenstoffmaterial oder inertem metallischen
oder metalloxidischen Material oder aus einer Kombination
dieser Materialien, d a d u r c h  g e k e n n z e i c h -
n e t ,  daß als Elektrolyt und zugleich als Reaktant an
der positiven Ableitelektrode pastöse, wasserhaltige, reduzierbare, eisenhaltige Verbindungsgemische dienen, die
durch Einwirkung von Luftsauerstoff ständig zurückoxidiert
werden.

2.    Galvanische Trockenzelle nach Anspruch 1,  d a d u r c h
g e k e n n z e i c h n e t ,  daß in den Verbindungsgemischen
der Eisengehalt überwiegt.

3.    Galvanische Trockenzelle nach Anspruch 1 oder 2,  d a -
d u r c h  g e k e n n z e i c h n e t ,  daß der Elektrolyt

aus reduzierbaren, wasserhaltigen, pastösen Mischungen von Eisenoxiden und Eisenhydroxiden besteht.

4. Galvanische Trockenzelle nach einem der Ansprüche 1 bis 3, d a d u r c h   g e k e n n z e i c h n e t , daß als Elektrolyt und Reaktant an der positiven Arbeitselektrode Eisen(III)-hydroxid-Gel der allgemeinen Formel $Fe_2O_3 \cdot x\ H_2O$ dient.

5. Galvanische Trockenzelle nach Anspruch 4, d a d u r c h   g e k e n n z e i c h n e t ,  daß das Eisen(III)-hydroxid-Gel infolge der Ausfällung mit Kaliumhydroxid aus wässriger Eisen(III)-chlorid-Lösung Kaliumionen und Chloridionen enthält.

6. Galvanische Trockenzelle nach Anspruch 4,  d a - d u r c h   g e k e n n z e i c h n e t ,  daß das Eisen(III)-hydroxid-Gel infolge der Ausfällung mit Natriumhydroxid aus wässriger Eisen(III)-chlorid-Lösung Natriumionen und Chloridionen enthält.

7. Galvanische Trockenzelle nach einem der Ansprüche 4 bis 6, d a d u r c h   g e k e n n z e i c h n e t , daß das Eisen(III)-hydroxid-Gel durch Ausfällung aus wässrigen Lösungen anderer Eisen(III)-Salze wie Eisen-(III)-sulfat oder Eisen(III)-nitrat gewonnen wird.

8. Galvanische Trockenzelle nach einem der Ansprüche 1 bis 7, d a d u r c h   g e k e n n z e i c h n e t , daß den Elektrolyten die elektrolytische Leitfähigkeit fördernde Substanzen wie Salze oder Hydroxide zugesetzt werden.

1/1

**Fig.1**

12  13
8
11
3
7
10
9
6
4
2
5
1

**Fig.2**

2
5
6
4